# EUROPEAN PATENT APPLICATION

(11) **EP 2 081 055 A2**
(43) Date of publication of application: **22.07.2009**
(21) Application number: 09150469.6
(22) Date of filing: 13.01.2009
(51) Int. Cl.: G01W 1/00

(54) **Differential pressure assemblies and methods of using same**

(30) Priority: 16.01.2008 US 15424
(71) Applicant: Honeywell International Inc., Morristown, NJ 07962 (US)
(72) Inventor: McKitterick, John B., Morristown, NJ 07962 (US); Horak, Dan T., Morristown, NJ 07962 (US)
(74) Representative: Buckley, Guy Julian

(57) **Abstract**

Differential pressure sensor assemblies for detecting and measuring infrasound, which is generally characterized as sound produced at frequencies below 20 Hertz (Hz). Specifically, the differential pressure sensor assemblies may form part of a detection system for clear air turbulence or other atmospheric turbulence. The differential pressure sensor assemblies detect a differential pressure across a flexible diaphragm that separates an ambient pressure chamber from a reference pressure chamber. In one embodiment, the pressure in the reference chamber may be controlled using a valve that may be selectively opened and closed. In another embodiment, the pressure in the reference chamber may be controlled using a static, structural member with a plurality of small openings that permits the reference chamber to be in continuous fluid communication with an ambient environment.

## Description

### BACKGROUND OF THE INVENTION

Clear air turbulence updrafts, downdrafts, and convective air flows all present severe hazards to aircraft. Effects on aircraft encountering any of these hazards range from severe buffeting to a structural or mechanical failure of one or more airplane components.

U.S. Patent. No. 6,480,142 issued to W. L. Rubin describes a system for detecting such hazards with the utilization of Doppler shifted frequencies of received radar signals backscattered from sound generated by atmospheric turbulent flows. The radiated radar signals are generally within the ultra-high frequency (UHF) or microwave bands. W. L. Rubin further describes how the sound, in a frequency range of about 0.1 - 20 Hertz (Hz), generated by atmospheric turbulent flows can be used to detect the presence of the turbulence. These sounds are in a frequency range that is difficult to measure with current pressure sensors and related microphone technology.

Clear air turbulence, a subset of atmospheric turbulence, is produced by high altitude atmospheric flows having speeds of 100 to 200 knots and generally cannot be seen or avoided by pilots without prior knowledge of its location. The costs resulting from flight vehicles that encounter clear air turbulence may include aircraft repair and downtime, crew injuries and passenger injuries.

Radar cannot detect clear air turbulence because it is composed of clear air which does not contain reflecting aerosols. A system known as LIDAR, operating in the infrared band is currently being assessed for its ability to detect clear air turbulence. An experimental LIDAR system, however, has generated clear air turbulence warnings of only a few seconds.

One drawback of using conventional pressure sensors to detect atmospheric turbulence is that they should achieve a requisite level of sensitivity over the frequency range of interest. Absolute pressure sensors do not have the requisite level of sensitivity and conventional differential pressure sensors have a limited pressure range over which they can achieve accurate and consistent measurements of the differential pressure. By way of example, one type of conventional differential pressure sensor is a Honeywell DC001NDR5 differential pressure sensor, which may accurately measure differential pressures within a range of about +/- 100 Pascals. However, when the differential pressure across the diaphragm is greater than 125 Pascals, the Honeywell DC001NDR5 differential pressure sensor may become saturated and thus essentially inoperative. Inside an aircraft cabin, for example, where the pressure sensors that would detect the sound from atmospheric turbulence would be placed, the differential pressure across the diaphragm is likely to shift by an amount much greater than 125 Pascals between takeoff and cruise altitude, especially since aircraft cabins are typically pressurized to the equivalent of about 8000 feet above sea level. Because the ambient pressure will change by much more than the 125 Pascals, the attempted approach of sealing off one side of the differential pressure sensor has been shown to be inadequate.

### BRIEF SUMMARY OF THE INVENTION

The present invention generally relates to a differential pressure sensor assembly capable of measuring small pressure variations over the desired range of frequencies for the detection of turbulence, even during large pressure changes in an ambient environment in which the differential pressure sensor assembly is located. In addition, the differential pressure sensor assembly may further detect a phase of infrasound spectral pressure frequencies associated with the small pressure variations which are associated with an atmospheric turbulence condition.

In one aspect of the invention, a differential pressure sensor assembly for detecting pressure variations relative to a baseline ambient pressure includes a sensor housing having an ambient chamber separated from a reference chamber with a flexible diaphragm. The reference chamber includes a reference pressure. A first pressure port of the sensor is in fluid communication with the ambient chamber and is open to permit continual pressurization of the first chamber with an ambient pressure. A second pressure port is in fluid communication with the reference chamber and a valve is positioned in-line with the second pressure port. The valve includes a closed position with the ambient pressure on an ambient side of the valve and the reference pressure on a reference side of the valve. The valve may be operable to selectively change the reference chamber pressure in the reference chamber after the ambient pressure in the ambient chamber reaches a threshold pressure difference between the ambient chamber and the reference chamber as detected by the flexible diaphragm between the two chambers. Optionally, a microprocessor may be in signal communication with the flexible diaphragm and operable to re-calibrate the differential pressure assembly after operation of the valve. In one embodiment, re-calibrating the differential pressure sensor assembly includes selectively changing the reference pressure in the reference chamber by opening the valve and then closing the valve after the reference pressure in the reference chamber is sufficiently below the threshold pressure difference such that the flexible diaphragm and microprocessor may cooperatively operate to measure the pressure variations that may be indicative of an atmospheric turbulence condition.

In another aspect of the invention, a differential pressure sensor assembly for detecting pressure variations relative to a baseline ambient pressure includes a sensor housing having an ambient chamber separated from a reference chamber with a flexible diaphragm. A first pressure port is in fluid communication with the ambient chamber and is open to permit continual pressurization of the first chamber having an ambient pressure. A second pressure port is in fluid communication with the reference chamber having a reference pressure. A static, structural member may be coupled to the second pressure port. The structural member includes an ambient side, a reference side and a plurality of openings extending through the structural member from the reference side to the ambient side. The plurality of openings are sized to continually maintain the reference pressure in the reference chamber below a desired differential pressure threshold as applied across the flexible diaphragm. Optionally, a microprocessor may be in signal communication with the flexible diaphragm and operable to measure the pressure variations relative to the baseline ambient pressure.

In yet another aspect of the invention, a method for detecting pressure variations in the desired range relative to a baseline ambient pressure using a differential pressure sensor assembly includes pressurizing an ambient chamber of the differential pressure sensor assembly, in which the ambient chamber is separated from a reference chamber by a flexible diaphragm. Pressurizing the ambient chamber may further include exchanging a fluid between the ambient chamber and an ambient environment. The method further includes selectively permitting fluid flow between the reference chamber and the ambient environment to permit the reference chamber to substantially, but not completely equilibrate with the ambient chamber and to maintain a differential pressure across the flexible diaphragm below a desired differential pressure threshold. Lastly, the method includes detecting the pressure variations over the desired frequency range relative to the baseline ambient pressure by measuring a phase of infrasound spectral frequencies associated with the pressure variations, where detecting the pressure variations over the desired frequency range includes detecting an amount of displacement of the flexible diaphragm.

### BRIEF DESCRIPTION OF THE DRAWINGS

Preferred and alternative embodiments of the present invention are described in detail below with reference to the following drawings:

FIGURE 1 is a schematic view of a differential pressure sensor assembly having a selectively operable valve according to an illustrated embodiment of the invention;

FIGURE 2 is a chart showing operation of the differential pressure sensor assembly of FIGURE 1 according to an illustrated embodiment of the invention; and

FIGURE 3 is a schematic view of a differential pressure sensor assembly having a structural member with a plurality of openings separating a reference chamber from an ambient environment according to an illustrated embodiment of the invention.

### DETAILED DESCRIPTION OF THE PREFERRED EMBODIMENT

In the following description, certain specific details are set forth in order to provide a thorough understanding of various embodiments of the invention. However, one skilled in the art will understand that the invention may be practiced without these details or with various combinations of these details. In other instances, well-known structures and methods associated with pressure sensors, microphones and methods of making and using the same may not be shown or described in detail to avoid unnecessarily obscuring descriptions of the embodiments of the invention.

The following description is generally directed to differential pressure sensor assemblies and methods for detecting and measuring infrasound, which is generally characterized as sound produced at frequencies below 20 Hertz (Hz). Specifically, the differential pressure sensor assemblies and methods may be useful for the detection of atmospheric turbulence that may endanger an airliner or other flight vehicle. The differential pressure sensor assemblies detect and/or measure a difference in pressure between an ambient pressure chamber and a reference pressure chamber separated by a flexible diaphragm. In one embodiment, a differential pressure sensor assembly includes a reference pressure chamber that is selectively vented to an ambient environment with a valve. In another embodiment, a differential pressure sensor assembly includes a reference pressure chamber vented to an ambient environment with structural member having a plurality of openings. In either embodiment, the venting advantageously permits a pressure on both sides of a pressure-sensing diaphragm to be substantially, but not completely equalized or equilibrated.

One or more of the differential pressure sensor assemblies may be arranged to take the form of an atmospheric turbulence detection system. In one aspect, the differential pressure sensor assemblies of the clear air turbulence detection system have a consistent phase response to detect and measure infrasound spectral frequency ranges associated with the differences in pressure between the ambient pressure chambers and the reference pressure chambers across the flexible diaphragm.

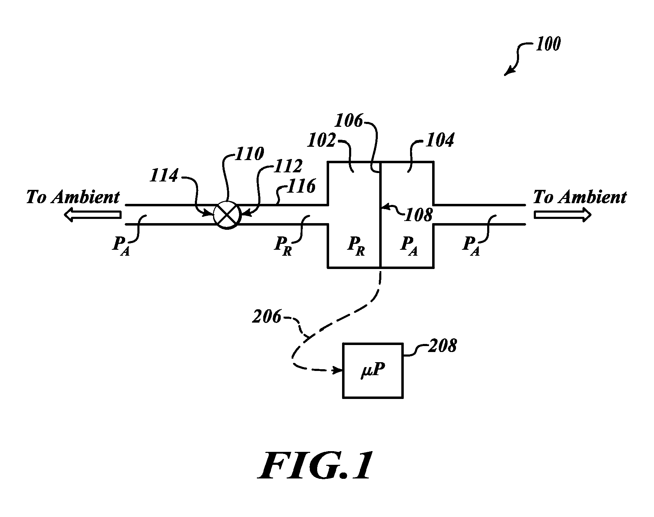

FIGURE 1 shows a differential pressure sensor assembly 100 that may be used in a atmospheric turbulence system for detecting and measuring atmospheric turbulence in a vicinity of a flight vehicle, such as an aircraft. A plurality of these assemblies may be placed at various locations inside the aircraft cabin in order to sample the ambient pressure inside the aircraft cabin at the various locations. These pressure assemblies will measure pressure variations inside the aircraft cabin that are caused by atmospheric turbulence external to the aircraft. The differential pressure sensor assembly 100 includes a reference chamber 102 separated from an ambient chamber 104 with a flexible diaphragm 106 according to the illustrated schematic representation of the invention.

By recognizing that the ambient pressure in the flight vehicle will change slowly compared to the frequencies associated with atmospheric turbulence, the differential pressure sensor assembly 100 may be regulated or controlled to operate effectively for at least a period of time with the reference chamber 102 sealed off. Then, the pressure in the reference chamber 102 may be selectively subjected to an ambient pressure, P_{A}, to equilibrate a differential pressure, ΔP (delta pressure), across the flexible diaphragm 106. In one embodiment, the flexible diaphragm includes a diaphragm surface 108 facing the ambient chamber 104 that is continually subjected to the ambient pressure P_{A}.

In one embodiment, selectively subjecting the reference chamber 102 to the ambient pressure P_{A} includes arranging a valve 110 in fluid communication with the reference chamber 102, such that the valve 110, when in a closed position, substantially maintains a reference pressure, P_{R}, between a first side 112 of the valve 110 and the reference chamber 102 by not subjecting the reference chamber 102 to the ambient pressure P_{A} present on a second side 114 of the valve 110. In the illustrated schematic embodiment, the valve 110 is positioned in-line with a pressure port 116 in fluid communication with and extending from the reference chamber 102. Although the pressure port 116 is illustrated as extending from the reference chamber 102, it is appreciated that the pressure port 116 may take the form of an opening in the reference chamber 102 with the valve 110 sealingly positioned within the opening.

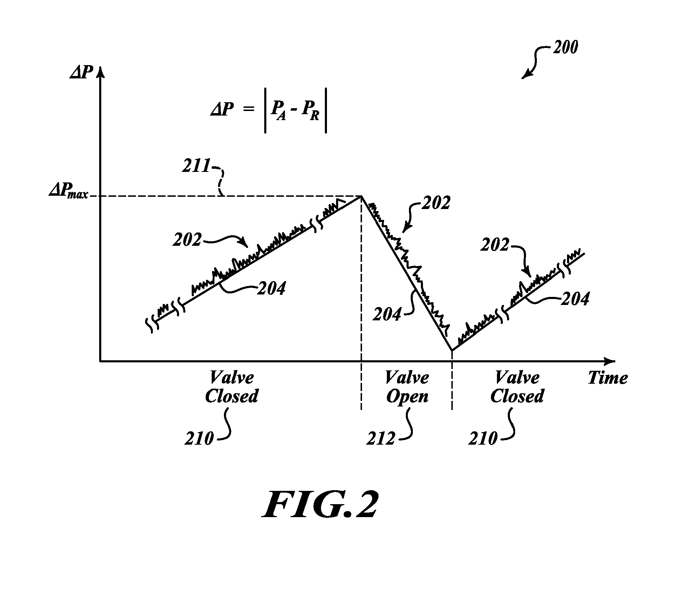

Briefly referring to FIGURE 2 and still referring to FIGURE 1 for the structural features of the differential pressure sensor assembly 100, a chart 200 shows the operation of the differential pressure sensor assembly 100 for detecting and measuring clear air turbulence in the vicinity of a flight vehicle. Specifically, the chart 200 shows the operation of the valve 110 as a function of the differential pressure ΔP across the flexible diaphragm 106.

One purpose of the differential pressure sensor assembly 100 as indicated by the chart 200 is to detect and measure small differential pressure variations 202 in the desired range of frequencies relative to a baseline or steady-state differential pressure 204. The detection of the small differential pressure variations 202 in the desired range of frequencies relative to the baseline differential pressure 204 is achieved by detecting an amount of displacement of the flexible diaphragm 106. By way of example, strain data 206 (FIGURE 1) indicative of the amount of displacement may be processed with a microprocessor or equivalent computing device 208 (FIGURE 1).

By further way of example, the diaphragm of the pressure sensor may be made of silicon, with resistors made in the silicon that change in value as the diaphragm is deformed by the difference in pressure between the two sides of the diaphragm. These changes in resistance may be detected accurately by a Wheatstone bridge configuration and processed with a microprocessor. When the differential pressure between the two chambers reaches a predefined threshold, the microprocessor will direct the valve to open, allowing the reference chamber to equilibrate with the ambient pressure. Once the pressure difference between the two chambers has fallen substantially to zero, the microprocessor will direct the valve to close, sealing off the reference chamber from ambient pressure changes. One way to operate the differential pressure sensor assembly 100 is to provide fluid communication between the reference chamber 102 and a valve 110 that may be selectively opened to the ambient pressure P_{A} and thus regulate the reference pressure P_{R}.

During operation, the valve 110 will be in a closed state 210 to substantially eliminate inconsistencies as the flexible diaphragm 106 attempts to respond to the fluid within the reference chamber 102 and the ambient chamber 104. As the ambient pressure P_{A} changes, the differential pressure ΔP between the reference chamber 102 and the ambient chamber 104 also changes. When the differential pressure ΔP reaches or at least comes close to reaching a predefined maximum differential pressure ΔP_{MAX} 211 that the differential pressure sensor assembly 100 is capable of measuring, the valve 110 may be commanded or moved to an open state 212 to substantially, but preferably not completely equalize or equilibrate between the reference chamber 102 and the ambient chamber 104. Once the substantial equilibration occurs, the valve 110 may then be commanded or moved back into the closed state 210. As discussed above the differential pressure would not be expected to change rapidly, so the length of time between the valve 110 moving from the open state 212 to the closed state 210 may be timed to permit the necessary measurements required for a detection of clear air turbulence, and specifically the detection of the small differential pressure variations 202 in the desired frequency range relative to a baseline or steady-state differential pressure 204. The timing and control of the valve 110 permits both the detection and the measurement of the small differential pressure variations 202 in the desired frequency range.

By way of example and referring to FIGURES 1 and 2, one method for detecting the small pressure variations 202 in the desired frequency range relative to the ambient pressure P_{A} using the differential pressure sensor assembly 100 includes pressurizing the ambient chamber 104 to exchange a fluid, such as air, between the ambient chamber 104 and the ambient environment P_{A}. Then, the valve 110 may be opened to selectively permit fluid flow between the reference chamber 102 and the ambient environment P_{A} such that the reference chamber 102 may substantially, but not completely equilibrate with the ambient chamber 104 to maintain the differential pressure ΔP across the flexible diaphragm 106 below a desired differential pressure threshold, which may be the maximum differential pressure ΔP_{MAX} 211 as described above. Detecting the small pressure variations 202 in the desired frequency range further includes measuring a phase of infrasound spectral frequencies associated with the pressure variations 202.

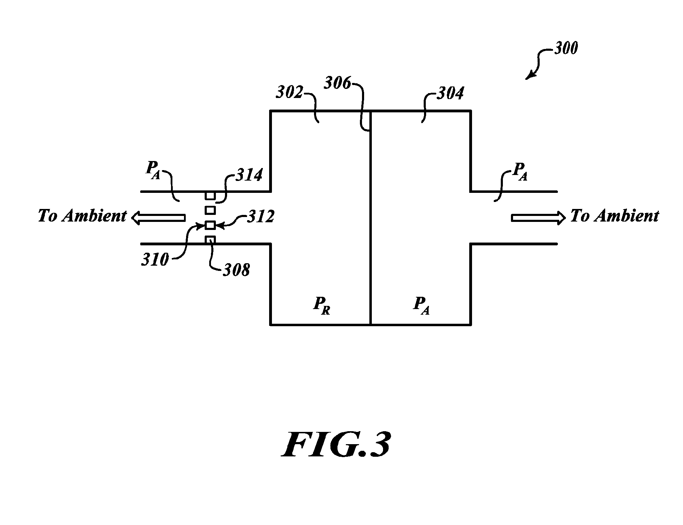

FIGURE 3 shows a differential pressure sensor assembly 300 that may be used in an atmospheric turbulence system for detecting and measuring clear air turbulence and other types of atmospheric turbulence in a vicinity of a flight vehicle. The differential pressure sensor assembly 300 includes a reference chamber 302 separated from an ambient chamber 304 with a flexible diaphragm 306 according to the illustrated schematic representation of the invention.

As noted above, the ambient pressure in the flight vehicle will change slowly compared to the desired frequency range, so instead of using the valve 110 (FIGURE 1), the reference pressure P_{R} in the reference chamber 302 may be regulated or controlled using a static, structural member 308 in fluid communication with the reference chamber 302. The structural member 308 includes an ambient side 310, a reference side 312 and a plurality of openings 314 extending through the structural member 308 from the reference side 312 to the ambient side 310. The plurality of openings 314 are sized to continually maintain the reference pressure P_{R} in the reference chamber below a desired differential pressure threshold as applied across the flexible diaphragm 306. In addition, the size of the plurality of openings 314 determines the frequency response of the differential pressure sensor assembly 300. Preferably, the cross-section of each opening 314 should be small enough so that pressure variations with frequencies in the range of frequencies typically associated with atmospheric turbulence do not have enough time to equalize in the reference chamber 302 during the long cycle time of the sound frequency. In addition and for the detection of clear air turbulence, the cross-section of each opening 314 is sized such that sound-generated pressures at very low frequencies, for example down to 0.1 Hz, may be detected.

The differential pressure sensor assemblies described above may advantageously provide a means to control the pressure in the reference chamber so that inconsistencies due to port response may be substantially reduced or eliminated while allowing the pressure in the reference chamber to vary so that the differential pressure across the flexible diaphragm does not exceed a threshold differential pressure, which may be about 125 Pascals, maximum.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A differential pressure sensor assembly for detecting pressure variations in a desired frequency range relative to a baseline ambient pressure, the differential pressure sensor assembly comprising:
a sensor housing having an ambient chamber separated from a reference chamber with a flexible diaphragm, the reference chamber having a reference pressure;
a first pressure port in fluid communication with the ambient chamber, the first pressure port open to permit continual pressurization of the first chamber with an ambient pressure;
a second pressure port in fluid communication with the reference chamber;
a valve positioned in-line with the second pressure port, the valve having a closed and opened position with the ambient pressure on an ambient side of the valve and the reference pressure on a reference side of the valve, the valve operable to selectively change the reference chamber in the reference chamber after the ambient pressure in the ambient chamber reaches a threshold pressure as detected by the flexible diaphragm; and
a microprocessor in signal communication with the flexible diaphragm and operable to re-calibrate the differential pressure assembly after operation of the valve, wherein re-calibrating the differential pressure sensor assembly includes selectively changing the reference pressure in the reference chamber by opening the valve,
wherein below the threshold pressure the flexible diaphragm and microprocessor cooperatively operate to measure the pressure variations in the desired frequency range relative to the baseline ambient pressure.

2. The differential pressure sensor assembly of Claim 1, wherein the pressure variations relative to the baseline ambient pressure have a frequency range of about 0.10 to 20.00 Hertz.

3. The differential pressure sensor assembly of Claim 1, wherein the flexible diaphragm produces a consistent phase response when subjected to a differential pressure below approximately 125 Pascals.

4. The differential pressure sensor assembly of Claim 1, wherein the threshold pressure is approximately 125 Pascals.

5. The differential pressure sensor assembly of Claim 1, wherein the valve is maintained in the closed position for a substantially longer time period than the valve is maintained in an open position.

6. A differential pressure sensor assembly for detecting high frequency pressure variations relative to a baseline ambient pressure, the differential pressure sensor assembly comprising:
a sensor housing having and an ambient chamber separated from a reference chamber with a flexible diaphragm;
a first pressure port in fluid communication with the ambient chamber, the first pressure port open to permit continual pressurization of the first chamber having an ambient pressure;
a second pressure port in fluid communication with the reference chamber having a reference pressure;
a static, structural member coupled to the second pressure port, the structural member having an ambient side and a reference side, the structural member further having a plurality of openings extending through the structural member from the reference side to the ambient side, the plurality of openings sized to continually maintain the reference pressure in the reference chamber below a desired differential pressure threshold as applied across the flexible diaphragm; and
a microprocessor in signal communication with the flexible diaphragm and operable to measure the pressure variations relative to the baseline ambient pressure.

7. The differential pressure sensor assembly of Claim 1, wherein the high frequency pressure variations relative to the baseline ambient pressure provide an indication of an atmospheric turbulence condition.

8. A method for detecting high frequency pressure variations relative to a baseline ambient pressure using a differential pressure sensor assembly, the method comprising:
pressurizing an ambient chamber of the differential pressure sensor assembly having the ambient chamber separated from a reference chamber by a flexible diaphragm, wherein pressurizing the ambient chamber includes exchanging a fluid between the ambient chamber and an ambient environment;
selectively permitting fluid flow between the reference chamber and the ambient environment to permit the reference chamber to substantially, but not completely equilibrate with the ambient chamber and to maintain a differential pressure across the flexible diaphragm below a desired differential pressure threshold; and
detecting the high frequency pressure variations relative to the baseline ambient pressure by measuring a phase of infrasound spectral frequencies associated with the pressure variations, wherein detecting the high frequency pressure variations includes detecting an amount of displacement of the flexible diaphragm.

9. The method of Claim 13, wherein selectively permitting fluid flow between the reference chamber and the ambient environment includes permitting fluid flow through a structural member having a plurality of openings, the structural member coupled to a port in fluid communication with the reference chamber.

10. The method of Claim 13, wherein selectively permitting fluid flow between the reference chamber and the ambient environment includes measuring a displacement of the flexible diaphragm.
